# EUROPEAN PATENT SPECIFICATION

(11) **EP 1 680 956 B1**
(45) Date of publication and mention of the grant of the patent: **03.10.2007**
(21) Application number: 05000670.9
(22) Date of filing: 14.01.2005
(51) Int. Cl.: A01K 5/01

(54) **Feed trough**
Futtertrog
Mangeoire

(43) Date of publication of application: 19.07.2006
(73) Proprietor: Polyflex ApS, 7480 Vildbjerg (DK)
(72) Inventor: Sorensen, Villy Juhl, 7430 Ikast (DK)
(74) Representative: Gregersen, Niels Henrik

(56) References cited:
- EP-A- 0 440 596

## Description

### Field of the Invention

The present invention concerns a feed trough, preferably for installation in a pigsty, where the feed trough includes a manger element and a support member.

### Background of the Invention

There are used traditionally suspended mangers of stainless steel, or cast concrete mangers that are cast into the floor, where the mangers are used for feed. The suspended stainless mangers are, however, not very cleaning friendly due to sharp edges, suspensions etc. In order to avoid bacterial growth and the like, the farmers have to use much time with cleaning the manger.

Concrete mangers are easier to clean than suspended stainless mangers, but on the other hand concrete mangers are permanently cast into the stable floor, which is expensive and inconvenient. The manger is cast into the stable floor along the side of the manger, whereby it is avoided that dirt and food remains accumulate under the manger. This solution, however, is costly and requires some casting effort, entailing that the capital costs in connection with the brick-work is rather high. Furthermore, it is not possible to replace the manger without cutting up the concrete which is also very costly.

### Purpose of the Invention

It is the purpose of the invention to provide a feed trough which is easy and rapid to mount and at the same time easy to clean, so that a high level of hygiene is maintained in and around the feeding trough.

This purpose is achieved with a feed trough according to the preamble of claim 1, where a recess with a bottom is formed in the top side of the support member, where the recess is adapted to receive at least one manger element which has at least one foot adapted to abut on the sidewalls of the recess, and which is provided with at least one cutout adapted to accommodate a filler mass which is provided between the foot and the sidewalls of the recess.

### Description of the Invention

The feed trough according to the invention includes at least one support member and at least one manger element, where a recess with bottom is formed in the top side of the support member. The recess is adapted to receive at least one manger element which can be made of polymeric concrete, stainless steel, plastic or similar.

In a preferred embodiment of the invention, the support member is a concrete element that may be provided in precast condition. Correspondingly, in a preferred embodiment of the invention the manger element is a polymeric concrete element which is also provided in precast condition.

The manger element includes at least one foot which is adapted to abut on the sidewalls of the recess, and which is provided with at least one cutout adapted to accommodate a filler mass which is provided between the foot and the sidewalls of the recess. Hereby is achieved a good sealing between the support member and the manger element, which may be cast in polymeric concrete in an embodiment of the invention.

This is a great advantage compared with prior art, since according to prior art it is necessary to roughen the surface of the manger by grinding in order to attain good sealing between the manger and the concrete floor and/or a foundation. By means of the filler mass it is now possible to achieve a good sealing while at the same time the manger is secured in the recess of the support unit without the polymeric concrete having to be worked.

In a preferred embodiment of the invention, the cutout is disposed under the top side of the support member. Hereby is ensured that the filler mass is correctly applied. In an alternative embodiment of the invention, the filler mass is to be placed above the top side of the support member.

In an advantageous embodiment of the invention, the support unit may be cast in concrete and may thus be produced and delivered with standard dimensions. The manger element of the feed trough may include a through-going foot, or several lesser feet that are distributed over the entire length of the manger.

The manger element is fastened and tightened with a filler mass which is easy as well as rapid to apply. The mounting work is hereby considerably reduced compared with prior art where the manger elements are cast permanently in connection with the stable floor.

Besides, a more cleaning friendly feed trough is achieved compared with a suspended stainless manger that includes edges and mounting devices where dirt may accumulate. As the manger element in a preferred embodiment of the invention is cast in polymeric concrete, its surface is very even and smooth and therefor easy to clean and to maintain. Thus it is easy to maintain a high level of hygiene in and around the feed trough.

In the present invention, the manger element is fastened with filler to the support unit, why the manger element is easy to dismount by e.g. cutting up the filler mass. This is a great advantage compared with traditional concrete mangers that are cast directly into or onto the stable floor, and where dismounting requires that the foundation of the manger is cut up, which is both costly and time-consuming. Furthermore, it is easy to clean the joint by passing a cloth or the like across the joint.

In a preferred embodiment of the invention, the support member includes at least two sections across its length, where each section has at least one top side extending at an angle in relation to the bottom of the recess. In that way, the feed trough may advantageously be used in a pigsty where the floor at one end includes a slatted floor which is substantially horizontal, and where the floor at the opposite end includes a concrete floor with a drop towards the slatted floor, so that water etc. runs towards the slatted floor.

In the section of the support member adjoining the concrete floor, the top side of the support member has a slope corresponding to the slope of the concrete floor, so that the top side of the concrete floor and the adjacent top side of the support member are flush.

The top side of the support member may advantageously be used as reference in connection with laying and trimming the slope of the adjacent concrete floor. The support member therefore minimises the mounting work with regard to laying and trimming the concrete floor of the stable. At the same time it becomes easier to achieve that the concrete floor is provided a certain slope. In an embodiment of the invention, the feed trough may be built up of one or more support members and/or mangers. In that way the support members and the mangers may be produced according to standard dimensions that fit the modular sizes commonly used in connection with stable equipment etc.

The support member is typically installed on a levelled sand base or on a levelled concrete floor which is substantially horizontal. The underside of the support member is plane, and since the bottom of the recess is substantially parallel with the underside, it is achieved that the bottom of the recess is kept horizontal. The manger is supported on the bottom of the recess, why the manger is also kept horizontal. Besides, this prevents water and the like from running down and standing at one end of the manger.

In an embodiment of the invention, the manger element includes one or more cutouts. In an embodiment of the invention, the cutouts may include longitudinal grooves or a number of holes which are disposed with suitable spacing along the foot of the manger element. The cutouts contribute to securing the filler mass so that it is not necessary to grind or in other ways to work the surface of the polymeric concrete for securing the filler. The filler mass thus acts as a kind of packing between the manger element and the adjacent support member.

In a preferred embodiment of the invention, the manger element is made of polymeric concrete, but in other embodiments of the invention be made of stainless steel or plastic.

### Description of the Drawing

The invention is described more closely with reference to the drawing, where:
- Fig. 1: shows a traditional feed trough which is cast into a stable floor;
- Fig. 2: shows a section of a feed trough according to the invention in perspective view;
- Fig. 3: shows a feed trough as seen from one end;
- Fig. 4: shows a section of a support member;
- Fig. 5: shows a cross-section of one section of the support member adjoining the concrete floor;
- Fig. 6: shows a cross-section of one section of the support member adjoining the slatted floor; and
- Fig. 7: shows a filler joint between the support member and the manger foot.

### Detailed Description of the Invention

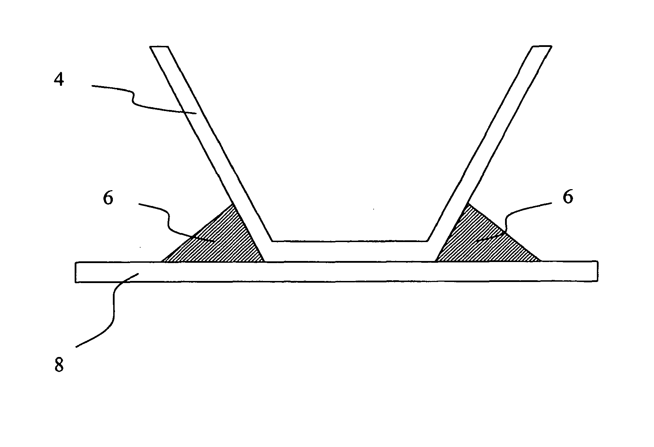

Fig. 1 shows a traditional concrete feed trough 4 which is cast into the underlying stable floor 8 with a foundation 6. As the concrete feed trough 4 is cast into the stable floor 8, the solution is time-consuming as well as expensive to provide. Furthermore, dismounting the concrete feed trough 4 necessitates cutting up the foundation 6.

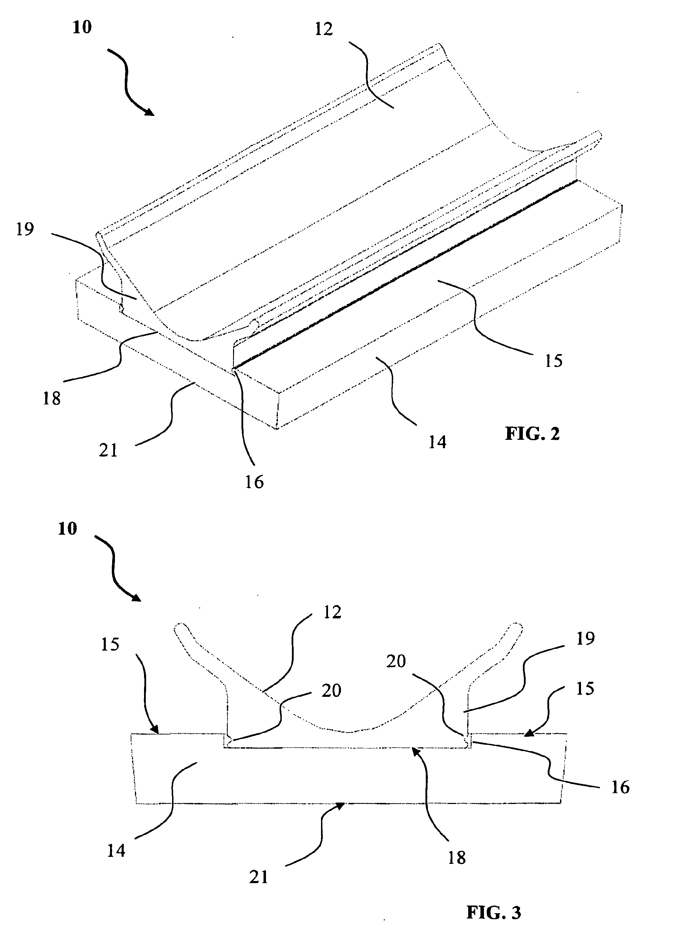

Fig. 2 shows a section of a feed trough 10 according to the invention in perspective view. The feed trough 10 includes a manger 12 which is sunken into a recess 16 on the support member 14. The manger 12 rests on the bottom 18 of the recess which is substantially horizontal over the entire length of the feed trough. The top side 15 of the support unit is also seen on the Figure. Besides, the Figure shows the foot 19 of the manger and the underside 21 of the support member.

Fig. 3 shows a feed trough 10 according to the invention seen from one end. On the Figure is seen the manger 12 which is sunk into the recess 16 on the support member 14, and where the underside of the manger element rests on the bottom 18 of the recess. The foot 19 of the manger includes a cutout 20 which is filled with filler mass (not shown). On the Figure is furthermore seen the top side 15 of the support member. The Figure shows in addition the foot 19 of the manger and the underside 21 of the support member.

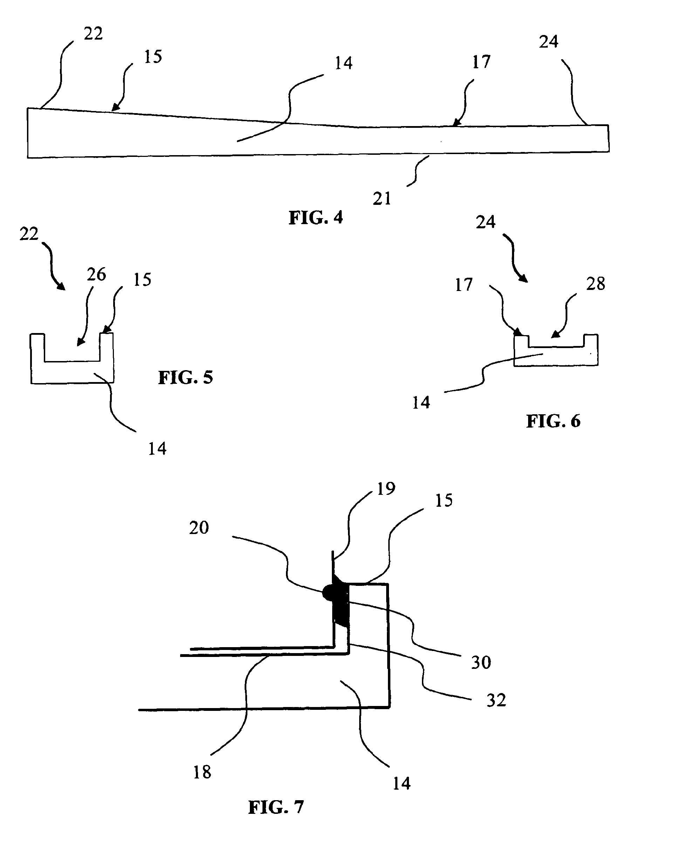

Fig. 4 shows a sectional view of support member 14. The support member 14 has two sections, of which one section 22 has a top side sloping in relation to the top side of the opposite section 24. The section 22 includes a sloping top side 15 in relation to the bottom of the recess. The section 22 adjoins the cast concrete floor (not shown) which has a slope of 2-3%. The Figure furthermore shows the underside 21 of the support member.

The horizontal section 24 includes a top side 17 which is substantially horizontal in relation to the bottom of the recess (not shown). The section 24 adjoins a slatted floor (not shown). The floor (not shown) and the slope of the top side 15 of the support member 22 provides for liquid, such as drinking water or urine, running down to the slatted floor and further down between the slats, finally ending under the slatted floor, where the waste is typically discharged via channels (not shown).

Fig. 5 shows a cross-section of one section of the support member 14 (shown as section 22 in Fig. 4), the section 22 adjoining a concrete floor (not shown). The support member 14 includes a recess 26 which is adapted to receive a manger element (not shown). The top side 15 of the support unit is also seen on the Figure.

Fig. 6 shows a cross-section of one section of the support member (shown as section 24 on Fig. 4), the section 24 adjoining a slatted floor (not shown). The support member 14 contains a recess 28 which is adapted for accommodating a manger element (not shown). The recess 28 is not so deep as the recess 26 shown on Fig. 5. On the Figure is furthermore seen the top side 17 of the support unit.

Fig. 7 shows a filler joint 30 arranged between the foot 19 of the manger and the support member 14. The filler mass 30 fills the space between the foot 19 of the manger and the sidewalls 32 of the support member, where the filler is secured by means of the cutout 20.

## Claims

1. A feed trough (10) including at least one support member (14) and at least one manger element (12), **characterised in that** a recess (16, 26, 28) with a bottom (18) is formed in the top side (15, 17) of the support member, where the recess (16,26,28) is adapted to receive at least one manger element (12) which has at least one foot (19) adapted to abut on the sidewalls (32) of the recess (16), and which is provided with at least one cutout (20) adapted to accommodate a filler mass (30) which is provided between the foot (19) and the sidewalls (32) of the recess (16).

2. Feed trough according to claim 1, **characterised in that** the support member (14) includes at least one top side (15, 17) extending at an angle relative to the bottom (18) of the recess.

3. Feed trough according to at least one of the claims 1 - 2, **characterised in that** the support member (14) includes at least two sections (22, 24) over its length, where each section (22, 24) has a top side (15, 17) extending at an angle relative to the bottom (18) of the recess (16).

4. Feed trough according to at least one of the claims 1 - 3, **characterised in that** the support member (14) includes an underside (21) which is substantially parallel with the bottom (18) of the recess.

5. Feed trough according to at least one of the claims 1 - 4, **characterised in that** the manger element (12) includes one or more cutouts (20).

6. Feed trough according to at least one of the claims 1 - 5, **characterised in that** the manger element (12) is made of polymeric concrete.

7. Feed trough according to at least one of the claims 1 - 5, **characterised in that** the manger element (12) is made of stainless steel.

8. Feed trough according to at least one of claims 1 - 5, **characterised in that** the manger element (12) made of plastic.

9. Feed trough according to at least one of claims 1 - 8, **characterised in that** the cutout (20) is placed under the top side (15, 17) of the support member (14).

## Patentansprüche

1. Ein Futtertrog (10), welcher wenigstens ein Trägerteil (14) und wenigstens ein Krippenelement (12) aufweist,
**dadurch gekennzeichnet, dass**
eine Ausnehmung (16, 26, 28) mit einem Boden (18) in die Oberseite (15, 17) des Trägerteils eingeformt ist, wobei die Ausnehmung (16, 26, 28) angepasst ist um wenigstens ein Krippenelement (12) aufzunehmen, welches wenigstens einen Fuß (19) hat, der angepasst ist um an die Seitenwände (32) der Ausnehmung (16) anzuliegen und welcher mit wenigstens einer Ausnehmung (20) versehen ist, die angepasst ist um eine Füllmasse (30) aufzunehmen die zwischen dem Fuß (19) und den Seitenwänden (32) der Ausnehmung (16) vorgesehen ist.

2. Futtertrog gemäß Anspruch 1, **dadurch gekennzeichnet, dass**
das Trägerteil (14) wenigstens eine Oberseite (15, 17) aufweist die sich bezüglich des Bodens (18) der Ausnehmung in einem Winkel erstreckt.

3. Futtertrog gemäß wenigstens einem der Ansprüche 1 bis 2, **dadurch gekennzeichnet, dass**
das Trägerteil (14) wenigstens zwei Abschnitte (22, 24) entlang seiner Länge aufweist, wobei jeder Abschnitt (22, 24) eine Oberseite (15, 17) aufweist, die sich bezüglich des Bodens (18) der Ausnehmung (16) in einem Winkel erstreckt.

4. Futtertrog gemäß wenigstens einem der Ansprüche 1 bis 3, **dadurch gekennzeichnet, dass**
das Trägerteil (14) eine Unterseite (21) aufweist, welche im Wesentlichen parallel zum Boden (18) der Ausnehmung ist.

5. Futtertrog gemäß wenigstens einem der Ansprüche 1 bis 4, **dadurch gekennzeichnet, dass**
das Krippenelement (12) eine oder mehrere Ausnehmungen (20) aufweist.

6. Futtertrog gemäß wenigstens einem der Ansprüche 1 bis 5, **dadurch gekennzeichnet, dass**
das Krippenelement (12) aus Polymerbeton hergestellt ist.

7. Futtertrog gemäß wenigstens einem der Ansprüche 1 bis 5, **dadurch gekennzeichnet, dass**
das Krippenelement (12) aus rostfreiem Stahl hergestellt ist.

8. Futtertrog gemäß wenigstens einem der Ansprüche 1 bis 5, **dadurch gekennzeichnet, dass**
das Krippenelement (12) aus Kunststoff hergestellt ist.

9. Futtertrog gemäß wenigstens einem der Ansprüche 1 bis 8, **dadurch gekennzeichnet, dass**
die Ausnehmung (20) unter der Oberseite (15, 17) des Trägerteils (14) angeordnet ist.

## Revendications

1. Auge (10) comprenant au moins un élément de support (14) et au moins un élément formant mangeoire (12), **caractérisée en ce qu'**un évidement (16, 26, 28) avec un fond (18) est formé sur le côté supérieur (15, 17) de l'élément de support, où l'évidement (16, 26, 28) est adapté pour recevoir au moins un élément formant mangeoire (12) qui a au moins un pied (19) adapté pour s'appuyer sur les parois latérales (32) de l'évidement (16) et qui est pourvu d'au moins une découpe (20) adaptée pour recevoir une masse de remplissage (30) qui est disposée entre le pied (19) et les parois latérales (32) de l'évidement (16).

2. Auge selon la revendication 1, **caractérisée en ce que** l'élément de support (14) comprend au moins un côté supérieur (15, 17) faisant un angle avec le fond (18) de l'évidement.

3. Auge selon au moins l'une des revendications 1 et 2, **caractérisé en ce que** l'élément de support (14) comprend au moins deux sections (22, 24) sur sa longueur, où chaque section (22, 24) à un côté supérieur (15, 17) faisant un angle avec le fond (18) de l'évidement (16).

4. Auge selon au moins l'une des revendications 1 à 3, **caractérisée en ce que** l'élément de support (14) comprend un côté inférieur (21) qui est sensiblement parallèle au fond (18) de l'évidement.

5. Auge selon au moins l'une des revendications 1 à 4, **caractérisée en ce que** l'élément formant mangeoire (12) comprend une ou plusieurs découpes (20).

6. Auge selon au moins l'une des revendications 1 à 5, **caractérisée en ce que** l'élément formant mangeoire (12) est fabriqué en béton polymère.

7. Auge selon au moins l'une des revendications 1 à 5, **caractérisée en ce que** l'élément formant mangeoire (12) est fabriqué en acier inoxydable.

8. Auge selon au moins l'une des revendications 1 à 5, **caractérisée en ce que** l'élément formant mangeoire (12) est fabriqué en plastique.

9. Auge selon au moins l'une des revendications 1 à 8, **caractérisée en ce que** la découpe (20) est placée en dessous du côté supérieur (15, 17) de l'élément de support (14).
